# EUROPÄISCHE PATENTSCHRIFT

(11) **EP 3 306 273 B1**
(45) Veröffentlichungstag und Bekanntmachung des Hinweises auf die Patenterteilung: **05.02.2020**
(21) Anmeldenummer: 16202382.4
(22) Anmeldetag: 04.12.2014
(51) Int. Cl.: G01D 5/241

(54) **KAPAZITIVER LINEARENCODER**
CAPACITIVE LINEAR ENCODER
CODEUR LINÉAIRE CAPACITIF

(43) Veröffentlichungstag der Anmeldung: 11.04.2018
(62) Teilanmeldung aus: 14196331.4
(73) Patentinhaber: Hexagon Technology Center GmbH, 9435 Heerbrugg (CH)
(72) Erfinder: ROHNER, Marcel, CH-9410 Heiden (CH); BEDNAREK, Ingo, 73734 Esslingen am Neckar (DE); WOHLGENANNT, Rainer, A-6833 Klaus (AT); BAUMANN, Lukas, CH-9000 St.Gallen (CH)
(74) Vertreter: Kaminski Harmann

(56) Entgegenhaltungen:
- EP-A1- 0 538 184
- WO-A1-02/21081
- DE-A1- 19 715 078

## Beschreibung

Die Erfindung betrifft einen kapazitiven Linearencoder nach dem Oberbegriff des Anspruchs 1, ein Verfahren zum Bestimmen von Positionen mit einem ebensolchen Linearencoder nach Anspruch 12 und ein ebensolches Computerprogrammprodukt nach Anspruch 15.

Linearencoder zur präzisen Wegmessung sind in vielen Anwendungsbereichen gefordert, in denen die Position eines entlang eines linearen Weges beweglichen Gliedes, z.B. die Stellung einer Maschinenkomponente auf einer linearen Achse zu bestimmen ist. Die dabei erfassten Stellungen können als Positionswerte zu Vermessungszwecken genutzt werden, oder auch für eine Positionierung von Komponenten durch einen Antrieb mit Positionsregelkreis. Solche linearen Positionsencoder finden sich entsprechend in Geräten wie Koordinatenmessmaschinen (CMM), geodätischen Geräten, Roboterarmen oder hydraulischen Aktuatoren.

Ein Linearencoder weist dazu eine Skala und einen Lesekopf zum Abtasten bzw. Ablesen der Skala auf, welche in einer Vorschubrichtung gegeneinander beweglich sind, sowie eine Steuer- und Auswerteeinheit zur Regelung von Messvorgängen und zur Zuordnung eines vom Lesekopf erzeugten Abtastsignals zu einer Position. Dabei sind je nach Anforderungen und baulichen Möglichkeiten entweder der sich in Vorschubrichtung erstreckende Lesekopf stationär und die Skala beweglich, z.B. in dem die Skala mit einem beweglichen Objekt, dessen lineare Bewegung erfasst werden soll, verbunden ist. Oder die in Vorschubrichtung sich erstreckende Skala ist fest positioniert und der Lesekopf wird relativ dazu verfahren, beispielsweise indem ein mit einem Lesekopf versehener Messschlitten einer Koordinatenmessmaschine über einen an einem Messtisch angebrachten Skalenträger verfahren wird. Zum Abtasten eignen sich prinzipiell unterschiedliche physikalische Wirkprinzipien, wie z.B. optisches oder kapazitives Abtasten. Dabei bieten kapazitive Linearencoder gegenüber vergleichbaren optischen Linearencodern den Vorteil einer geringeren Leistungsaufnahme und kostengünstigeren Aufbaus.

Es sind inkrementelle und absolute Linearencoder bekannt, beispielsweise aus der WO 02/21081 A1. Bei absoluten Systemen ist jeder Relativlage von Lesekopf zu Skala unmittelbar eine Position zuordenbar indem die Skala über die gesamte Messstrecke einen absoluten Positionscode aus eindeutigen Codewörtern aufweist, welche durch eine Steuer- und Auswerteeinheit genau einer Position zuordenbar ist. Bei Linearencodern mit inkrementellem Bestimmen von Positionen hingegen sind die Abtastsignale nicht eindeutig, sondern wiederholen sich über den gesamten Messbereich vielfach. In einer Steuer- und Auswerteeinheit des Linearencoders ist hinterlegt, welcher Distanz ein Inkrement entspricht. Somit kann die Distanz, welche bei einer Relativbewegung von Skala und Lesekopf zurückgelegt wird, und damit eine relative Position durch Abzählen der Inkremente bestimmt werden. Um eine solche relative Position absolut zu verorten, wird bei einer Relativbewegung von einer definierten Nullstellung als absoluter Bezugspunkt ausgegangen. Eine solche Nullstellung bzw. Nullpunkt wird durch einen vom Lesekopf detektierbaren Positionsreferenzmarker auf der Skala (bzw. bei stationärer Skala auf dem Lesekopf) definiert. Bei kapazitiven Messsystemen basiert ein solcher Positionsreferenzmarker üblicherweise nicht auf kapazitivem, sondern auf magnetischem oder induktivem Wirkprinzip.

Die EP 1173730 B1 offenbart demgegenüber einen kapazitiven Linearencoder mit einem einen Nullpunkt definierenden Positionsreferenzmarker, der auf kapazitivem Wirkprinzip beruht. Der Linearencoder weist eine Skala mit rechteckigen Receiverelektroden auf, welche von einem Lesekopf mittels einer rechteckigen Empfängerplatte kapazitiv abtastbar sind. Als Positionsreferenzmarker, der den absoluten Bezugspunkt indiziert, dienen zwei zusätzliche zueinander benachbarte rechteckige Receiverelektroden auf der Skala, welche eine grössere Breite, verstanden als Ausdehnung in Vorschubrichtung, besitzen als die übrigen, der Festlegung der Inkremente dienenden Receiverelektroden. Mittels einer zusammenschauenden Auswertung sowohl der Differenz als auch der Summe der kapazitiven Signale, welche beim Abtasten der zwei zusätzlichen Receiverelektroden entstehen, wird der Nullpunkt indiziert.

Die absolute Verortung der Positionen anhand der abgezählten Inkremente, ausgehend vom Nullpunkt, ist allerdings, besonders bei kapazitiven Linearencodern mit einer relativ langen Messstrecke, naturgemäss fehleranfällig, beispielsweise durch fehlerhafte Inkrementmasse oder Fehler beim Abzählen der Inkremente, z.B. durch verrauschte oder gestörte Abtastsignale. Die Vermeidung bzw. Kompensation solch fehlerhafter absoluter Positionswerte erfordert bei Linearencodern nach dem Stand der Technik Skalen, die hochpräzise gefertigt und montiert sind, aufwändige Mittel zur elektrischen Abschirmung, wie sie z.B. in der EP 1173730 B1 vorgeschlagen werden, und/oder aufwändige Fehlerkorrekturmassnahmen. Derlei Massnahmen sind kostenaufwändig.

Die Aufgabe der vorliegenden Erfindung besteht daher in der Bereitstellung eines verbesserten kapazitiven Linearencoders.

Eine weitere Aufgabe der vorliegenden Erfindung besteht in der Bereitstellung eines kapazitiven Linearencoders mit verbesserten kapazitiven Positionsreferenzmarkern.

Eine weitere Aufgabe der vorliegenden Erfindung besteht in der Bereitstellung eines kapazitiven Linearencoders mit vereinfachter elektrischer Abschirmung.

Eine weitere Aufgabe der vorliegenden Erfindung besteht in der Bereitstellung eines Verfahrens zum Bestimmen von Positionen für einen solchen Linearencoder.

Diese Aufgaben werden erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung betrifft einen kapazitiven Linearencoder zur Bestimmung von Positionen entlang einer Vorschubrichtung. Der Linearencoder weist einen Lesekopf mit einer Vielzahl von ersten Koppelelektroden, insbesondere Emitterelektroden, und eine Skala mit einer Vielzahl von zweiten Koppelelektroden, insbesondere Receiverelektroden auf, wobei Skala und Lesekopf in Vorschubrichtung relativ zueinander verschiebbar sind und die Skala mittels des Lesekopfs mittels kapazitiven Wirkungsprinzips abtastbar ist. Weiter weist der Linearencoder eine Steuer- und Auswerteeinheit auf. Die ersten Koppelelektroden weisen wenigstens drei zueinander versetzte Koppelsignalphasen auf. Mit anderen Worten sind die ersten Koppelelektroden in wenigstens drei Gruppen eingeteilt, wobei jede erste Koppelelektrode genau einer Gruppe zugehörig ist. Vorzugsweise finden vier jeweils um ein Viertel zueinander versetzte Phasen Verwendung. Die Abfolge der Koppelsignalphasen bzw. der ersten Koppelelektroden ist durch eine Phasenpermutation definiert, so dass jeweils eine Reihe benachbarter erster Koppelelektroden ein Phasenpermutationsintervall, im Folgenden kurz P-Intervall genannt, bilden, wobei der Lesekopf optional eine Anzahl M gleicher P-Intervalle aufweist. Unter einer Phasenpermutation wird dabei, wie aus dem Stand der Technik, beispielsweise der US 6940278 B2, bekannt, das Prinzip verstanden, dass im Vergleich zur einfachsten Möglichkeit der Phasenabfolge, bei der die jeweils direkt benachbarte erste Koppelelektrode die jeweils direkt nächste Phase aufweist, die Abfolge der Phasen über einen gewissen Abschnitt, welcher einem P-Intervall entspricht, geändert ist, unter Beibehaltung einer Gleichverteilung der Phasen über die gesamte Koppelelektrodenreihe.

Die zweiten Koppelelektroden sind vorzugsweise alle gleich gestaltet, d.h. sie sind baugleich und weisen gleiche Form und Grösse (Breite, Länge, Dicke) auf. Die Breite der ersten Koppelelektroden und der zweiten Koppelelektroden sind aufeinander abgestimmt, wobei unter Breite der Koppelelektroden die maximale oder mittlere Ausdehnung in Vorschubrichtung verstanden wird, entsprechend unter deren Länge die maximale oder mittlere Ausdehnung quer zur Vorschubrichtung. Durch kapazitive Kopplung werden gesteuert durch die Steuer- und Auswerteeinheit zeitlich sich ändernde Koppelsignale zwischen den ersten und zweiten Koppelelektroden ausgetauscht. sind.

Der Austausch von Koppelsignalen zwischen den ersten und den zweiten Koppelelektroden ist abhängig von der Relativlage von Skala zu Lesekopf, weshalb durch Signalauswertung der zwischen den ersten und zweiten Koppelelektroden übertragenen Koppelsignale und in der Steuer- und Auswerteeinheit hinterlegter Information eine Position als Relativlage von Lesekopf zu Skala von der Steuer- und Auswerteeinheit bestimmbar ist. Bevorzugt sind die Koppelelektroden und Koppelsignale derart aufeinander abgestimmt, vorzugsweise durch ihre Formgebung, dass durch eine Verschiebung der Skala relativ zum Lesekopf ein sinusförmiger Verlauf der Koppelsignale generiert wird. Die Positionsbestimmung erfolgt dabei nach inkrementellen Messprinzip. Für eine differentielle Signalauswertung sind die zweiten Koppelelektroden in wenigstens zwei zueinander wechselseitige Sorten aufgeteilt. Bei bevorzugt zwei Sorten führen alle "geraden" Koppelelektroden "positive" und alle "ungeraden" dazu inverse "negative" Koppelsignale. Dabei sind die jeweils übernächsten zweiten Koppelelektroden gleicher Sorte, mit anderen Worten sind die in Vorschubrichtung direkt benachbarten zweiten Koppelelektroden zueinander wechselseitig. Für einen einfachen Aufbau der Skala sind die zweiten Koppelelektroden der einen Sorte vorzugsweise gegensinnig zu denen der anderen Sorte ausgerichtet, also um 180° zueinander verdreht.

Die Skala ist passiv ausgeführt, d.h. dass die Skala keine elektrische Kontaktierung, z.B. in Form von Versorgungsleitungen oder Signalleitungen, von aussen aufweist. Zum Abgriff der Koppelsignale weist der Linearencoder bzw. die Skala Signalüberführungsmittel zur Übertragung der Koppelsignale zwischen Skala und Lesekopf auf. Die Übertragung von Koppelsignalen mittels der Signalüberführungsmittel ist dabei nicht wie der Austausch von Koppelsignalen zwischen den ersten und zweiten Koppelelektroden positionsabhängig.

Die Skala weist weiter wenigstens einen Positionsreferenzmarker auf. Der Positionsreferenzmarker ist vorzugsweise kapazitiv, d.h., dass der Positionsreferenzmarker nach gleichem Wirkungsprinzip wie die zweiten Koppelelektroden abtastbar bzw. erfassbar sind. Dabei wird ein jeweiliger Positionsreferenzmarker mittels der Signalüberführungsmittel gebildet. Hierzu sind eins oder mehrere der Signalüberführungsmittel modifiziert, und zwar an einer Stelle der Skala, die eine Positionsreferenz definiert. Zur Identifikation eines Positionsreferenzmarkers ist der Positionsreferenzmarker mittels von der Steuer- und Auswerteeinheit gesteuerter Identifikationssignale identifizierbar.

Allgemein gesprochen ist durch einen an einem definierten Ort der Skala befindlichen Positionsreferenzmarker jeweils eine Positionsreferenz festgelegt zur Referenzierung der Positionen. Optional dient ein Positionsreferenzmarker zur Definition eines absoluten Referenzpunkts der Skala, z.B. eines Nullpunkts oder sonstigem absoluten Bezugspunkt, wodurch die inkrementell bestimmten Positionen absolut verortbar sind. Durch einen der Positionsreferenzmarker wird optional also ein absoluter Bezug bereitgestellt, wodurch, beispielsweise ausgehend vom Nullpunkt die Positionen absolut bestimmbar sind. Zusätzlich oder alternativ dient ein oder mehrere Positionsreferenzmarker zur Verifizierung der absolut verorteten Positionen, d.h. dass mittels des oder der Positionsreferenzmarker die absoluten Positionen überprüfbar sind. Mit anderen Worten stellt ein solcher Positionsreferenzmarker jeweils eine Positionsreferenz bereit, anhand derer die Fehlerhaftigkeit einer Position, welche anhand von zwischen den ersten und zweiten Koppelelektroden übertragenen Koppelsignalen und eines absoluten Referenzpunktesabsolut bestimmt ist,. Ein absoluter Referenzpunkt ist dabei vorzugsweise durch einen erfindungsgemäss kapazitiven Positionsreferenzmarker gebildet, z.B. durch den der Verifizierung dienenden Positionsreferenzmarker selbst oder einen zweiten Positionsreferenzmarker.

Weist die Skala mehrere Positionsreferenzmarker auf, dann sind diese in Vorschubrichtung definiert auf der Skala verteilt, d.h. es finden sich in festgelegten Abständen in allen Bereichen der Skala Positionsreferenzmarker. Dabei wird bei der Verteilung eine Mindestdichte eingehalten, d.h. dass über die ganze Skala gemittelt und/oder pro Abschnitt der Skala pro Längeneinheit eine Mindestanzahl an Positionsreferenzmarker vorhanden ist, wobei optional ein Maximalabstand zwischen den Positionsreferenzmarker nicht überschritten wird. Die einzelnen Abstände zwischen den Positionsreferenzmarker bzw. der Abstand jedes einzelnen Positionsreferenzmarkers zum Nullpunkt sind in der Steuer- und Auswerteeinheit hinterlegt. Vorzugsweise ist die Verteilung der Positionsreferenzmarker auf der gesamten Skala gleichmässig, d.h. dass der Abstand in Vorschubrichtung der Positionsreferenzmarker zueinander gleich bleibend ist, also alle Positionsreferenzmarker gleichen Abstand zueinander aufweisen, wobei der dann einzige Abstandswert in der Steuer- und Auswerteeinheit hinterlegt ist.

In bevorzugten Ausführungsformen weist der Linearencoder Signalüberführungsmittel mit kapazitivem Wirkprinzip auf, welche ausgebildet sind als Überführungselektroden. Dabei weist die Skala je Sorte der zweiten Koppelelektroden mehrere zweite Überführungselektroden und der Lesekopf je Sorte wenigstens eine erste Überführungselektrode auf. Erste Überführungselektroden und zweite Überführungselektroden gleicher Sorte koppeln kapazitiv miteinander. Optional sind die Ausdehnungen quer zur Vorschubrichtung der ersten und zweiten Überführungselektroden unterschiedlich. Hierdurch ist eine Robustheit gegenüber Abweichungen von einer Ideallage quer zur Vorschubrichtung von Lesekopf zur Skala gegeben. Jede zweite Überführungselektroden ist mit einer oder mehreren zweiten Koppelelektroden elektrisch leitend verbunden, so dass Koppelsignale von den zweiten Koppelelektroden über die zweiten Überführungselektroden auf die erste Überführungselektroden gelangen oder umgekehrt von der ersten Überführungselektroden über die zweiten Überführungselektroden auf die zweiten Koppelelektroden. Optional ist jede zweite Überführungselektroden mit einer Sequenz von in Vorschubrichtung benachbarten zweiten Koppelelektroden elektrisch leitend verbunden, wobei hinsichtlich einer optimierten Kopplungssignalrückführung vorteilhaft die Länge einer solchen Sequenz, verstanden als Ausdehnung in Vorschubrichtung, der Länge entspricht, über die sich ein P-Intervall auf dem Lesekopf erstreckt.

In Ausführungsformen, welche Überführungselektroden aufweisen, sind die Positionsreferenzmarker optional gebildet mittels modifizierter zweiter Überführungselektroden. Positionsreferenzmarker werden erfindungsgemäss also dadurch bereitgestellt, dass zweite Überführungselektroden modifiziert sind und zwar vorzugsweise indem wenigstens zwei zweite Überführungselektroden gleicher Sorte, welche benachbart zueinander sind, elektrisch leitend miteinander verbunden sind. Alternativ sind umgekehrt zweite Überführungselektroden dadurch modifiziert und bilden Positionsreferenzmarker, dass eine elektrisch leitende Verbindung zwischen wenigstens zwei benachbarten Überführungselektroden unterbrochen ist bzw. eine Überführungselektrode in wenigstens zwei voneinander isolierte Teile getrennt ist. Die Bereitstellung von Positionsreferenzierung durch Positionsreferenzmarker erfolgt also mit Hilfe von zweiten Überführungselektroden, deren Ausdehnung in Vorschubrichtung z.B. doppelt so gross ist und die mit einer doppelt so grossen Anzahl von zweiten Koppelelektroden verbunden sind wie die übrigen zweiten Überführungselektroden. Zur Positionsreferenzmarkeridentifikation weist der Lesekopf in diesen Ausführungsformen wenigstens eine dritte Koppelelektrode auf, vorzugsweise pro Sorte der zweiten Koppelelektroden wenigstens eine, insgesamt also wenigstens zwei dritte Koppelelektroden. Die dritte Koppelelektrode ist geeignet zur Übertragung zeitlich sich ändernder Identifikationssignale, welche mittels kapazitiver Kopplung zwischen der dritten Koppelelektrode und den zweiten Überführungselektrode, also einem Positionsreferenzmarker, übertragbar sind. Ein jeweiliger Positionsreferenzmarker wird anhand der Identifikationssignale identifiziert.

Als weitere Option ist die dritte Koppelelektrode dergestalt am Lesekopf angebracht, dass sich die dritte Koppelelektrode in Bezug auf die Vorschubrichtung vor oder nach der ersten Überführungselektrode befindet. Weist der Lesekopf pro Sorte wenigstens zwei dritte Koppelelektroden auf, sind diese symmetrisch angebracht, so dass sich eine dritte Koppelelektrode vor der ersten Überführungselektrode befindet und eine danach. Die erste Überführungselektrode und die dritte Koppelelektrode sind dabei elektrisch isoliert voneinander d.h. nicht durch elektrische Kontakte miteinander verbunden.

Die dritte Koppelelektrode und die als Positionsreferenzmarker dienenden modifizierten zweiten Überführungselektroden sind derart aufeinander abgestimmt, dass die kurzgeschlossenen zweiten Überführungselektroden zur Übermittlung der Identifikationssignale zwischen der dritten Koppelelektrode und der ersten Überführungselektroden dienen, so dass eine Zuführung von von der dritten Koppelelektrode übertragenen Koppelsignalen zur Steuer- und Auswerteeinheit nur in Präsenz eines kapazitiven Positionsreferenzmarkers in Form der kurzgeschlossenen zweiten Überführungselektroden erfolgt. Alternativ sind die zweiten Überführungselektroden dahingehend modifiziert, dass eine Zuführung von von der dritten Koppelelektrode übertragenen Koppelsignalen zur Steuer- und Auswerteeinheit ausschliesslich ausserhalb der Präsenz eines kapazitiven Positionsreferenzmarkers erfolgt, beispielsweise indem die zweiten Überführungselektroden nicht kapazitiv koppelnd sind oder die Modifikation dergestalt ist, dass an dieser Stelle Überführungselektroden weggelassen sind. Eine derartige Abstimmung wird vorzugsweise erreicht, indem die kurzgeschlossenen zweiten Überführungselektroden eine Erstreckung in Vorschubrichtung aufweisen, die derart gross ist, dass in gleich bleibender Relativlage von Lesekopf zu Skala die kurzgeschlossenen zweiten Überführungselektroden sowohl mit der jeweiligen ersten Überführungselektroden als auch mit der dritten Koppelelektrode kapazitiv koppelbar sind. Eine solche Übertragung der Identifikationssignale erfolgt ausschliesslich in Präsenz der kurzgeschlossenen zweiten Überführungselektroden. Somit sind die durch die kurzgeschlossenen zweiten Überführungselektroden gebildeten Positionsreferenzmarker erfassbar und identifizierbar. Unter Präsenz ist dabei zu verstehen, dass eine solche Relativlage von Lesekopf zu Skala vorliegt, bei der sich die dritte Koppelelektrode mitsamt der ersten Überführungselektroden und kurzgeschlossenen zweiten Überführungselektroden zumindest teilweise gegenüberstehen, so dass diese mit der dritten Koppelelektrode und der ersten Überführungselektroden kapazitiv koppeln.

Optional weist der Lesekopf wenigstens eine Referenzfläche auf als Normierungsreferenz zur Normierung des Abstands von Lesekopf zu Skala bzw. des Abstands der ersten zu den zweiten Koppelelektroden und damit der abstandsabhängigen kapazitiven Kopplungssignale.

Als weiteres optionales Merkmal weist der Lesekopf Abschirmelektroden zur elektrischen Abschirmung der ersten Überführungselektroden auf, wodurch durch externe oder interne Quellen bedingte Störungen der Koppelsignale zumindest vermindert werden. Diese Abschirmelektroden umgeben die ersten Überführungselektroden vollständig, d.h. von allen Seiten, oder teilweise, z.B. nur an am Lesekopf in Vorschubrichtung aussen liegenden Rändern der ersten Überführungselektroden n.

Besonders vorteilhaft sind in einigen Ausführungsformen zumindest einige Abschirmelektroden identisch mit den dritten Koppelelektroden, d.h. die dritten Koppelelektroden dienen sowohl zur Identifizierung der Positionsreferenzmarker als auch zur Abschirmung der ersten Überführungselektroden Hinsichtlich der elektrischen Abschirmung vorteilhaft weist dann ein Lesekopf wenigstens vier dritte Koppelelektroden auf, pro Sorte zwei, die paarweise symmetrisch um die jeweilige erste Überführungselektroden angeordnet sind, so dass eine dritte Koppelelektrode der ersten Überführungselektrode in Vorschubrichtung vor- und eine dritte Koppelelektrode der ersten Überführungselektrode nachgeordnet ist. Somit wird durch ein jeweiliges Paar dritter Koppelelektroden die jeweilige erste Überführungselektrode in Bezug auf die Vorschubrichtung an beiden Endes des Lesekopfs abgeschirmt. Dabei weist der Lesekopf vorzugsweise zwischen den dritten Koppelelektroden und der ersten Überführungselektrode jeweils weitere Abschirmelektroden auf, welche zur elektrischen Abschirmung der ersten Überführungselektrode dienen.

Zur Kompensation von Signalübersprechen, Minderung bzw. Abschirmung externer Störsignale und/oder Änderungen des Abstands zwischen den ersten und zweiten Koppelelektroden und damit der kapazitiven Kopplung weisen einige Ausführungsformen wenigstens eine elektrisch abschirmende Schutzelektrode auf, welche die ersten Koppelelektroden vollständig oder teilweise umgibt. Optional weist auch die Skala wenigstens eine elektrisch abschirmende Schutzelektrode auf zur Minderung externer Störsignale.

Die ersten Koppelelektroden sind für eine sinusartige Signalcharakteristik der Koppelsignale in einer Fortbildung des erfindungsgemässen Linearencoders sinusartig geformt, wobei die mit ihnen koppelnden zweiten Koppelelektroden eine Rechtecksform aufweisen. Alternativ sind die zweiten Koppelelektroden sinusartig geformt. Für eine möglichst dichte Anordnung der ersten Koppelelektroden auf dem Lesekopf sind als weitere Option die einander zugewandten Ränder direkt benachbarter erster Koppelelektroden etwa gerade geformt. Die direkt benachbarten ersten Koppelelektroden sind dabei gegensinnig zueinander ausgerichtet.

In einer alternativen Ausführungsform weist der Linearencoder einen Lesekopf mit einer Vielzahl von ersten Koppelelektroden, insbesondere Emitterelektroden, auf und eine Skala mit einer Vielzahl von zweiten Koppelelektroden, insbesondere Receiverelektroden, wobei Skala und Lesekopf in Vorschubrichtung relativ zueinander verschiebbar sind und die Skala mittels des Lesekopfs mittels kapazitiven Wirkungsprinzips abtastbar ist. Weiter weist der Linearencoder eine Steuer- und Auswerteeinheit auf. Die ersten Koppelelektroden weisen wenigstens drei zueinander versetzte Koppelsignalphasen auf. Vorzugsweise finden vier jeweils um ein Viertel zueinander versetzte Phasen Verwendung. Die Abfolge der Koppelsignalphasen ist durch eine Phasenpermutation definiert, so dass jeweils eine Reihe benachbarter erster Koppelelektroden ein Phasenpermutationsintervall, im Folgenden kurz P-Intervall genannt, bilden, wobei der Lesekopf optional eine Anzahl M gleicher P-Intervalle aufweist.

Die zweiten Koppelelektroden der alternativen Ausführungsform sind vorzugsweise alle gleich gestaltet, d.h. sie sind baugleich und weisen gleiche Form und Grösse (Breite, Länge, Dicke) auf. Die Breite der ersten Koppelelektroden und der zweiten Koppelelektroden sind aufeinander abgestimmt, wobei unter Breite der Koppelelektroden die maximale oder mittlere Ausdehnung in Vorschubrichtung verstanden wird, entsprechend unter deren Länge die maximale oder mittlere Ausdehnung quer zur Vorschubrichtung. Durch kapazitive Kopplung werden gesteuert durch die Steuer- und Auswerteeinheit zeitlich sich ändernde Koppelsignale zwischen den ersten und zweiten Koppelelektroden ausgetauscht. Durch Signalauswertung der zwischen den ersten und zweiten Koppelelektroden ausgetauschten Koppelsignale und in der Steuer- und Auswerteeinheit hinterlegter Information ist eine Position als Relativlage von Lesekopf zu Skala von der Steuer- und Auswerteeinheit bestimmbar. Die Positionsbestimmung erfolgt dabei nach inkrementellen Messprinzip. Für eine differentielle Signalauswertung sind die zweiten Koppelelektroden in wenigstens zwei zueinander wechselseitige Sorten aufgeteilt d.h. jede zweite Koppelelektrode führt z.B. "positive" oder dazu inverse "negative" Koppelsignale. Dabei sind die jeweils übernächsten zweiten Koppelelektroden gleicher Sorte, mit anderen Worten sind die in Vorschubrichtung direkt benachbarten zweiten Koppelelektroden zueinander wechselseitig.

Die Skala der alternativen Ausführungsform ist passiv ausgeführt, d.h. dass die Skala keine elektrische Kontaktierung, z.B. in Form von Versorgungsleitungen oder Signalleitungen, von aussen aufweist. Zum Abgriff der Koppelsignale weist der Linearencoder bzw. die Skala Signalüberführungsmittel zur Übermittlung der Koppelsignale zwischen Skala und Lesekopf auf. Die Übertragung von Koppelsignalen mittels der Signalüberführungsmittel ist dabei nicht wie der Austausch von Koppelsignalen zwischen den ersten und zweiten Koppelelektroden positionsabhängig.

Als Signalüberführungsmittel mit kapazitivem Wirkprinzip dienen in der alternativen Ausführungsform Überführungselektroden, wobei die Skala pro Sorte der zweiten Koppelelektroden mehrere zweite Überführungselektroden und der Lesekopf pro Sorte der der zweiten Koppelelektroden wenigstens eine erste Überführungselektroden aufweisen. Jede zweite Überführungselektrode ist mit einer oder mehreren zweiten Koppelelektroden gleicher Sorte elektrisch leitend verbunden und koppelt mit der wenigstens einen ersten Überführungselektrode gleicher Sorte kapazitiv. Weiter weist der Lesekopf Abschirmelektroden zur elektrischen Abschirmung der ersten Überführungselektroden auf. Bevorzugt sind die Abschirmelektroden paarweise je einer ersten Überführungselektroden in Vorschubrichtung vor- und nachgeordnet angebracht sind, so dass durch ein jeweiliges Paar von Abschirmelektroden die jeweilige erste Überführungselektroden in Bezug auf die Vorschubrichtung an beiden Endes des Lesekopfs abschirmbar ist. Dabei ist erfindungsgemäss die Ausdehnung in Vorschubrichtung der Anordnung der ersten Koppelelektroden grösser ist als diejenige der ersten Überführungselektroden, so dass ein Teil der ersten Koppelelektroden sich über die erste Überführungselektroden in Vorschubrichtung hinaus erstreckt. Dadurch werden vorteilhafterweise Randeffekte vermindert bzw. vermieden. Optional ist die Ausdehnung in Vorschubrichtung der Anordnung der ersten Koppelelektroden mindestens etwa so gross wie die Ausdehnung in Vorschubrichtung der jeweiligen ersten Überführungselektroden und deren Abschirmelektroden zusammen. Sind die Abschirmelektroden paarweise vorhanden, so erstreckt sich die Reihe der ersten Koppelelektroden über beide Enden der ersten Überführungselektroden hinaus entlang der Abschirmelektroden beider Seiten.

Durch die vorliegende Erfindung wird vorteilhaft ein kapazitiver Linearencoder bereitgestellt, welcher auf einfache Weise kapazitive Positionsreferenzmarker bereitstellt. Mit dem erfindungsgemäss Linearencoder sind mittels kapazitivem, inkrementellem Abzählens Positionen bestimmbar und diese anhand kapazitiver Positionsreferenzmarker, also mittels kapazitivem Wirkprinzips, absolut verortbar und verifizierbar sind. Der vorliegende kapazitive inkrementelle Linearencoder bietet gegenüber kapazitiven absoluten Linearencodern den Vorteil einer wesentlich einfacheren Positionscodierung und damit einer wesentlich einfacheren und kostengünstigeren Skala und einfacheren, energiesparenden und schnelleren Auswertung der Abtast- bzw. Koppelsignale. Die absolute Verortung der Positionen kann wie die inkrementelle Positionsermittlung mittels kapazitivem Wirkprinzip erfolgen, was den Aufbau des Linearencoders vereinfacht und somit den Linearencoder kostengünstiger macht. Durch eine Vielzahl von auf der Skala verteilten Positionsreferenzmarkern ist vorteilhaft ermöglicht, dass die absolut verorteten Positionen überprüfbar und gegebenenfalls anhand der Positionsreferenzen korrigierbar sind, so dass Fehler bei der inkrementellen Positionsbestimmung kompensierbar sind. Somit sind die Anforderungen an die Präzision der inkrementellen Positionsbestimmung und damit an die Skala wesentlich geringer als bei kapazitiven Linearencodern nach dem Stand der Technik. Da an eine solche Skale nur geringe Anforderungen gestellt werden müssen, kann diese mit preisgünstigen Materialen gefertigt sein und mit relativ grossen Toleranzen hergestellt und montiert werden, was zu erheblichen Kostenvorteilen gegenüber vergleichbaren kapazitiven Linearencodern nach dem Stand der Technik führt. Zudem ist vorteilhaft, dass die Positionsreferenzmarker nicht in sich, also nicht jeder Positionsreferenzmarker für sich allein, eine absolute Positionsreferenz bereitstellt, wodurch auf Absolutcodes, welche vergleichsweise aufwändig sind, verzichtet wird. Die absolute Positionsreferenz ergibt sich erfindungsgemäss vielmehr durch die hinterlegten Abstände der Positionsreferenzmarker zueinander bzw. zu einem absoluten Referenzpunkt. Dies bietet besonders dann Vorteile, wenn wie bevorzugt die Positionsreferenzmarker gleichmässig verteilt sind, also der Abstand der Positionsreferenzmarker zueinander immer gleich ist. Da also die Skala so gesehen aus einer Aneinanderreihung von gleichen Teilstücken besteht, kann bei solchen bevorzugten Ausführungsformen die Skala entsprechend des für die konkrete Anwendung benötigten Messhubes einfach in entsprechender Länge von einer "endlosen" Skala abgeschnitten werden. Solche "endlose" Skalen sind besonders kostengünstig herstellbar.

Die kapazitiven Positionsreferenzmarker verursachen im Gegensatz zu kapazitiven Linearencodern nach dem Stand der Technik keine Lücken in dieser Spur, so dass die Bestimmung von relativen Positionen anhand der durch die Spur bereitgestellten Inkremente ungestört entlang der ganzen Skala erfolgen kann. Bei Positionsreferenzmarkern nach dem Stand der Technik, wie z.B. von der EP 1173730 B1 in Form von abgewandelten Receiverelektroden vorgeschlagen werden, ist es nicht möglich, Positionsreferenzmarker verteilt auf der Skala anzuordnen, da dadurch die Spur der Receiverelektroden Lücken aufweist und somit die inkrementelle Positionsbestimmung unterbrochen wird. Somit sind bei Skalen mit kapazitiven Positionsreferenzmarkern nach dem Stand der Technik die kapazitiven Positionsreferenzmarker nur am Anfang bzw. Ende der Skala platzierbar. Verglichen mit dem Stand der Technik bietet der erfindungsgemässe Linearencoder den Vorteil, dass Positionsverifizierung an beliebig vielen Stellen der Skala möglich ist. Da der Aufbau einer erfindungsgemässen Skala hinsichtlich der Anordnung der Positionsreferenzmarker somit kaum Beschränkungen unterliegt bietet die vorliegende Erfindung zudem den Vorteil, dass für unterschiedliche Messaufgaben und damit einhergehende unterschiedliche Anforderungen an den Linearencoder Skalen hinsichtlich der Positionsreferenzmarker auf einfache Weise und damit kostengünstig und schnell modifizierbar sind, womit Kundenwünschen sehr flexibel entsprochen werden kann.

Durch die vorliegende Erfindung werden kapazitive Positionsreferenzmarker bereitgestellt ohne dass wie in kapazitiven Linearencodern nach dem Stand der Technik speziell ausgebildete Receiverelektroden notwendig sind. Durch die vorliegende Erfindung sind alle zweiten Koppelelektroden gleich gestaltbar. Somit bietet die vorliegende Erfindung den Vorteil, dass im Vergleich zu Skalen kapazitiver Linearencoder nach dem Stand der Technik vereinfacht aufgebaut und damit kostengünstiger herstellbar ist. Dabei ist als weiterer, Herstellung und Montage vereinfachender Vorteil die Skala passiv ausgeführt, indem der Linearencoder Mittel zur Rückführung der Koppelsignale von der Skala auf den Lesekopf aufweist, wobei erfindungsgemäss die Positionsreferenzmarker in solchen Linearencoder skalenseitig unaufwändig und damit kostengünstig durch Kurzschluss von zwei oder mehr benachbarten Überführungselektroden bereitstellbar sind, welche mittels dritter Koppelelektroden des Lesekopfs identifizierbar sind.

Durch den vorgeschlagenen Linearencoder sind weiter aufwändige Mittel zur elektrischen Abschirmung wie bei Linearencodern nach dem Stand der Technik unnötig. Für Anwendungen mit höheren Präzisionserforderungen werden durch die vorliegende Erfindung gleichwohl Linearencoder mit vereinfachter Abschirmung bereitgestellt. In Ausführungsformen mit Überführungselektroden erfolgt eine Abschirmung vorteilhaft dadurch, dass die lesekopfseitige Überführungselektroden von Abschirmelektroden umgeben ist. Die der Abschirmung dienenden Abschirmelektroden sind in besonders vorteilhaften Ausführungsformen identisch mit den dritten Koppelelektroden, so dass die Abschirmelektroden in solchen Fällen keine zusätzlichen Bauteile, sondern für eine Identifizierung der Positionsreferenzmarker bereits vorhanden sind. Durch die dritten Koppelelektroden werden also sowohl Mittel zur Positionsreferenzmarkeridentifizierung als auch Mittel zur Abschirmung der ersten, der inkrementellen Positionsbestimmung dienenden Überführungselektroden bereitgestellt, was die Herstellung des Lesekopfs vereinfacht und damit relativ kostengünstig macht.

Die vorliegende Erfindung betrifft ausserdem ein Verfahren zum Bestimmen von Positionen für einen erfindungsgemässen Linearencoder. Im Rahmen des Verfahrens werden ausgehend von einer ersten Relativlage von Lesekopf zu Skala die beiden Einheiten entlang der Vorschubrichtung gegeneinander verschoben. Die Skala wird vom Lesekopf kapazitiv abgetastet mittels Austauschen von Koppelsignalen zwischen den ersten und zweiten Koppelelektroden. Das Austauschen der Koppelsignale ist abhängig von der jeweiligen Relativlage des Lesekopfs zur Skala, d.h. übertragene Koppelsignale sind je nach Relativlage unterschiedlich, so dass anhand der Koppelsignale eine relative Position als Distanz der ersten zur einer zweiten Relativlage mittels differentiellem Signalauswerten der übertragenen Koppelsignale bestimmt wird. Im Rahmen des Verfahrens erfolgt ein Übertragen der Koppelsignale mittels der Signalüberführungsmittel zwischen Skala und Lesekopf. Das Übertragen erfolgt im Gegensatz zum Austauschen von Koppelsignalen zwischen den ersten und zweiten Koppelelektroden im Wesentlichen unabhängig von der jeweiligen Relativlage.

In einer Fortbildung des Verfahrens wird im Zuge des Verschiebens der Skala relativ zum Lesekopf mittels Identifikationssignale wenigstens ein Positionsreferenzmarker identifiziert. Anhand des identifizierten Positionsreferenzmarker wird die mittels der übertragenen Koppelsignale relativ bestimmte Position absolut verortet und/oder eine absolut verortete Position verifiziert. Eine absolut verorteten Position wird beispielsweise anhand einer zweiten Positionsreferenz wie einem zweiten kapazitiven Positionsreferenzmarker mittels des Abstands in Vorschubrichtung zwischen dem ersten und dem zweiten Positionsreferenzmarker verifiziert. Zum Verifizieren der absoluten Position ist der Abstand in Vorschubrichtung zwischen dem ersten und dem zweiten Positionsreferenzmarker in der Steuer- und Auswerteeinheit hinterlegt. Gleichfalls ist der Abstand in Vorschubrichtung weiterer Positionsreferenzmarker zueinander in der Steuer- und Auswerteeinheit hinterlegt. Bevorzugt ist der Abstand zwischen allen Positionsreferenzmarkern gleich.

Optional stellt das erfindungsgemässe Verfahren für einen Linearencoder mit wenigstens einer dritten Koppelelektrode einen Positionsbestimmungsmodus bereit. Bei Ausführung des Positionsbestimmungsmodus werden Positionen inkrementell bestimmt, wobei die Koppelsignale zur Positionsbestimmung ausgewertet werden. Dritte Koppelelektroden sind im Positionsbestimmungsmodus geerdet, und dienen als Abschirmelektroden zur Abschirmung der ersten Überführungselektroden. Zudem stellt das Verfahren einen Positionsreferenzmarkeridentifizierungsmodus bereit, in welchem mittels der wenigstens einen dritten Koppelelektrode Identifikationssignale zur Identifizierung von Positionsreferenzmarkern übertragen werden und Identifikationssignale zur Identifizierung der Positionsreferenzmarker ausgewertet werden, beispielsweise um Positionen absolut zu verorten und verifizieren. Hierbei laufen optional mittels eines Zeitmultiplexverfahrens die beiden Modi sequentiell zueinander ab, d.h. dass im Zuge einer Relativverschiebung von Skala zu Lesekopf abwechselnd sowohl Positionen bestimmt als auch Positionsreferenzmarker identifiziert werden und zum Beginn des einen Modus nicht das Ende des anderen Modus abgewartet werden muss. So erfolgen z.B. im Zuge der Relativverschiebung abwechselnd ein Positionsbestimmen und ein Positionsreferenzmarkeridentifizieren. Dies erfolgt beispielsweise nach festgelegten Zeitabständen. Alternativ oder zusätzlich erfolgt ein Wechsel in den Positionsreferenzmarkeridentifizierungsmodus abhängig vom zurückgelegten Verschiebeweg, wobei optional anhand der im Positionsbestimmungsmodus bestimmten Position prädiktiv zum Positionsreferenzmarkeridentifizierungsmodus gewechselt wird, um einen an dieser Position vermuteten Positionsreferenzmarker zu identifizieren.

Mittels eines Zeitmultiplexverfahrens erfolgt in einer weiteren Fortbildung des Verfahrens mittels Zeitmultiplexverfahren das Übertragen von Koppelsignalen für unterschiedliche Koppelsignalphasen zeitlich versetzt zueinander, was Vorteile hinsichtlich einer Störungsfreiheit der Koppelsignale und hinsichtlich der Signalverarbeitung bietet.

Als weitere Option werden im Rahmen des Verfahrens die Amplituden der Koppelsignale bei deren Auswertung berücksichtigt. Dadurch werden Abweichungen der Formen oder Lagen der Koppelelektroden von Idealformen bzw. Ideallagen kompensiert, wodurch vorteilhaft Präzisionssteigerungen bzw. grössere Fertigungstoleranzen erreicht werden.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des Verfahrens zum Bestimmen und Verifizieren von Positionen.

Der erfindungsgemässe kapazitive Linearencoder sowie das erfindungsgemässe Verfahren zum Bestimmen und Verifizieren von Positionen werden nachfolgend anhand von in der Zeichnung schematisch dargestellten Ausführungsbeispielen rein beispielhaft näher beschrieben.

Im Einzelnen zeigen
- Fig.1: schematisch eine erste Ausführungsform eines erfindungsgemässen Linearencoders,
- Fig.2a-c: schematische Beispiele für die Ausgestaltung und Anordnung der Receiverelektroden und Emitterelektroden,
- Fig.3: ein schematisches Beispiel für eine erfindungsgemässe Skala, und
- Fig.4: ein schematisches Beispiel für einen erfindungsgemässe Lesekopf.

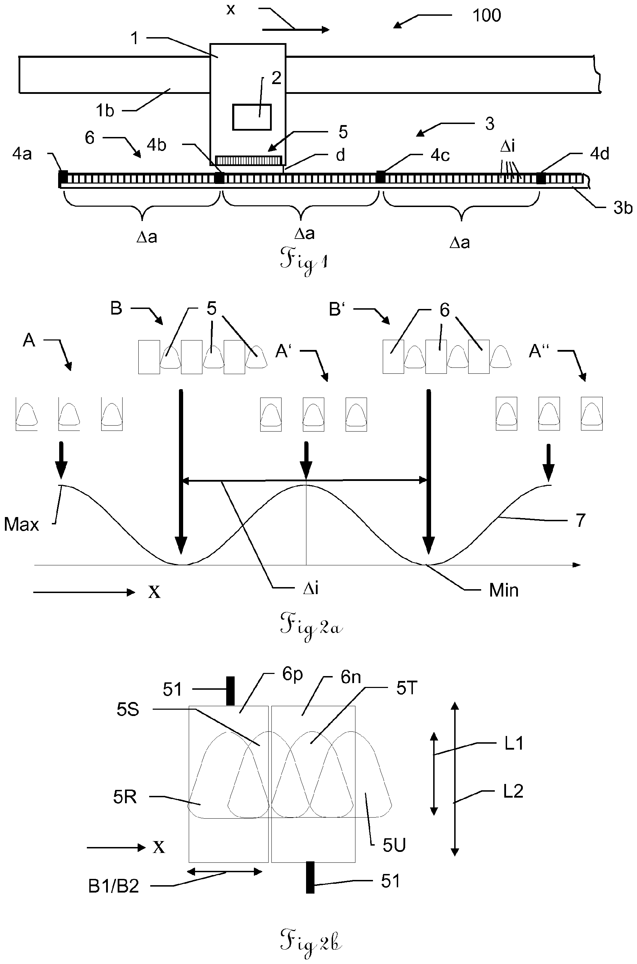

Fig.1 zeigt einen erfindungsgemässen kapazitiven Linearencoder 100 mit einem Lesekopf 1 zur kapazitiven Abtastung der auf dem Skalenträger 3b angebrachten Skala 3, wobei der Lesekopf 1 mittels einer Schiene 1b relativ zur Skala 3 in Vorschubrichtung x bewegbar ist. Der Lesekopf 1 weist eine Steuer- und Auswerteeinheit 2 auf und eine Vielzahl von ersten Koppelelektroden 5, im Beispiel ausgebildet als Emitterelektroden 5, welche mit zeitlich sich ändernden Koppelsignalen, beispielsweise mittels Wechselspannung oder Einschaltvorgänge, angesteuert werden. Der Abstand d von Lesekopf 1 zur Skala 3 ist derart bemessen, dass die ersten Koppelelektroden 5 mit zweiten Koppelelektroden 6, im Beispiel ausgebildet als Receiverelektroden 6, der Skala 3 kapazitiv koppeln und die zeitlich sich ändernden Koppelsignale zwischen den ersten und zweiten Koppelelektroden 5 bzw. 6 ausgetauscht werden. Im Beispiel erfolgt der Austausch, indem die von den Emitterelektroden 5 emittierten Koppelsignale von den Receiverelektroden 6 empfangen werden. Alternativ werden von den zweiten Koppelelektroden zeitlich sich ändernde Koppelsignale emittiert und von den ersten Koppelelektroden empfangen. Der Austausch der Koppelsignale bzw. die empfangenen Koppelsignale ist abhängig von der Relativstellung der Emitterelektroden 5 zu den Receiverelektroden 6 und damit von der Relativlage des Lesekopfs 1 zur Skala 3. Die Positionsbestimmung erfolgt durch differentielles Signalauswerten der ausgetauschten Koppelsignale durch die Steuer- und Auswerteeinheit 2. Hinsichtlich des differentiellen Auswertens der Koppelsignale sind die Receiverelektroden 6 in zwei wechselseitige Sorten (z.B. "positiv" und "negativ") unterteilt, wobei jeweils übernächste der Vielzahl von Receiverelektroden 6 gleicher Sorte sind.

Durch die Receiverelektroden 5 werden dabei Inkremente Δi gebildet, deren Länge in der Steuer- und Auswerteeinheit 2 hinterlegt ist, so dass eine relative Position als Ausmass einer Verschiebung von Lesekopf 1 zu Skala 3 von einer ersten Relativlage von Lesekopf 1 zu Skala 3 zu einer zweiten Relativlage durch Abzählen der Inkremente Δi zwischen den beiden Relativlagen berechnet wird. Eine solchermassen relative Position wird absolut verortet, indem die erste Relativlage einem absoluten Referenzpunkt, vorzugsweise einem definierten Nullpunkt, als absolute Positionsreferenz entspricht oder eindeutig auf eine weitere, dem absoluten Referenzpunkt entsprechende Relativlage bezogen werden kann. Ein solcher Nullpunkt als absoluter Bezugspunkt zur absoluten Verortung der durch Abzählen der Inkremente erhaltenen Positionen ist im Beispiel durch den Positionsreferenzmarker 4a definiert, der sich zweckmässig, aber nicht notwendigerweise, am Anfang der Skala 3 befindet. Der Positionsreferenzmarker 4a ist ebenfalls kapazitiv d.h. durch den Lesekopf 1 kapazitiv abtastbar. Im Rahmen einer Positionsbestimmung wird ausgehend von einer ersten Relativlage der Lesekopf 1 relativ zur Skala 3 in eine zweite Relativlage verschoben, wobei mit dem Lesekopf 1 der Positionsreferenzmarker 4a abgetastet und die Anzahl der Inkremente Δi zwischen der ersten und der zweiten Relativlage anhand der Koppelsignale gezählt wird. Aus der Anzahl der Inkremente Δi zwischen dem Nullpunkt und der zweiten Relativlage ist die gesuchte Position absolut verortbar.

Zur Verifizierung der solchermassen verorteten Position weist die Skala 3 weitere kapazitive Positionsreferenzmarker 4b-4d auf, welche auf der Skala 3 verteilt sind. Die Verteilung der Positionsreferenzmarker 4a-4d weist dabei eine Mindestdichte auf, d.h. eine Mindestanzahl an Positionsreferenzmarker 4a-4d pro Längeneinheit. Die Positionsreferenzmarker 4a-4d sind definiert, also an wohlbekannten Stellen der Skala, verteilt, wozu sie im Beispiel gleichmässig verteilt, d.h. gleichbeabstandet zu einander sind. Der Abstand Δa zueinander beträgt je nach Gesamtlänge der Skala 3 und Anforderungen an die Präzision der Positionsbestimmung beispielsweise zwischen 5cm oder 50cm, z.B. 10cm oder 20cm, oder zwischen 1cm und 100cm und in der Steuer- und Auswerteeinheit 2 hinterlegt ist. Durch Erfassen wenigstens eines Positionsreferenzmarkers 4b-4d zusätzlich zum Nullpunkt definierenden Positionsreferenzmarker 4a wird anhand des hinterlegten Abstands Δa eine absolute Positionsreferenz bereitgestellt, welche dazu dient, eine wie beschrieben inkrementell bestimmte und absolut verortete Position zu verifizieren, d.h. auf Fehler zu überprüfen, welche z.B. beim Abzählen der Inkremente Δi und/oder aufgrund von Fertigungsungenauigkeiten der Skala 3 entstehen können. Der erfindungsgemässe Linearencoder 100 stellt somit Mittel zur Verifizierung der bestimmten Positionen bereit, wodurch Anforderungen an die Fertigungsgenauigkeit der Skala 3 bzw. den Skalenträger 3b im Vergleich zu kapazitiven Linearencodern 100 nach dem Stand der Technik gemindert sind oder bei gleicher Fertigungsgenauigkeit Positionen präziser bestimmbar sind. Selbstverständlich können die erfindungsgemässen Positionsreferenzmarker 4b-4d auch zur Verifizierung einer relativen, d.h. nicht absolut verorteten, Position dienen, indem im Zuge einer Relativverschiebung von Skala 3 zur Lesekopf 1 wenigstens zwei Positionsreferenzmarker 4b-4d erfasst werden.

Die erfindungsgemässe Skala 3 ist passiv. Die Receiverelektroden 6 sind also nicht unmittelbar mit der Steuer- und Auswerteeinheit 2 verbunden. Um die von den Emitterelektroden 6 empfangenen Koppelsignale der Steuer- und Auswerteeinheit 2 zuzuführen, weisen die Skala 3 und der Lesekopf 1 Signalüberführungsmittel auf, welche Koppelsignale zwischen der Skala 3 und dem Lesekopf 1 übertragen. Im Beispiel werden also die von der Skala 3 empfangenen Koppelsignale auf den Lesekopf 1 mittels der Signalüberführungsmittel rückgeführt, von wo aus die Koppelsignale der Steuer- und Auswerteeinheit 2 zugeführt werden. Erfindungsgemäss dienen skalenseitige Signalüberführungsmittel dazu, die Positionsreferenzmarker 4a-4d zu bilden, wozu ein oder mehrere Signalüberführungsmittel an Stellen, die eine Positionsreferenz definieren, modifiziert sind. Diese modifizierten Signalüberführungsmittel sind mittels von der Steuer- und Auswerteeinheit gesteuerter Identifikationssignale identifizierbar. Die Bereitstellung von Positionsreferenzmarker mittels modifizierter Signalüberführungsmittel bietet den Vorteil, dass die inkrementelle Spur von den Positionsreferenzmarker 4a-4d nicht unterbrochen bzw. gestört wird, was überhaupt erst ermöglicht, ausser am Anfang bzw. Ende der Skala weitere Positionsreferenzmarker 4b-4d anzubringen. Die Positionsreferenzmarker 4a-4d führen zu keiner Behinderung der durch die Receiverelektroden 6 gebildeten Spur, welche die Bestimmung der relativen Positionen beeinträchtigen würde. D.h. dass auch bei einem Verschieben des Lesekopfs 1 über Stellen der Skala 3 hinweg, die Positionsreferenzmarker 4a-4d aufweisen, das Abzählen der Inkremente Δi fortlaufend fortgeführt werden kann. Die Skala 3 weist also sowohl kapazitive Positionsreferenzmarker auf als auch eine kontinuierliche inkrementelle Spur.

Fig. 2a zeigt schematisch ein Beispiel für die Ausgestaltung der Receiverelektroden und Emitterelektroden. Dargestellt sind als Ausschnitt aus dem Linearencoder in fünf verschiedenen Relativlagen A, A', A"', B und B' von Skala zu Lesekopf jeweils drei Emitterelektroden 5 als Ausschnitt aus dem Lesekopf und zeichnerisch überdeckend jeweils drei rechteckförmige Receiverelektroden 6 einer Sorte als Ausschnitt aus der Skala. Der Einfachheit halber sind in Fig. 2a die ebenfalls rechteckförmigen und zwischen den Receiverelektroden 6 der dargestellten Sorte angeordneten Receiverelektroden der wechselseitigen Sorte ausgelassen. Für eine sinusförmige Charakteristik der übertragenen Koppelsignale weisen die Receiverelektroden 6 die dargestellte Rechtecksform und die Emitterelektroden 5 die dargestellte Sinusform auf, wobei die Breite als (maximale) Ausdehnung in Vorschubrichtung x der Receiverelektroden 6 und diejenige der Emitterelektroden 5 aufeinander abgestimmt sind, im Beispiel indem die Breite zumindest annähernd gleich ist. Somit erfolgen bei einer Relativbewegung in Vorschubrichtung x von Skala zu Lesekopf, und damit der ersten zu den zweiten Koppelelektroden 5 bzw. 6, Übergänge von Zuständen einer vollständigen Überlagerung von Emitterelektroden 5 mit Receiverelektroden 6 einer Polung (Relativlagen A, A' und A") zu Zuständen, in dem keine Überlagerung vorhanden ist (Relativlagen B und B'). Dadurch ergibt sich der dargestellte sinusförmige Verlauf des Koppelsignals 7 einer festgelegten Phase mit Maxima der Signalamplitude für vollständige Überlagerung in den Relativlagen A, A' und A" und Minima für überlagerungslose Relativlagen B und B'. Die zwischen den ersten und zweiten Koppelelektroden übertragenen Koppelsignale 7 enthalten eine Information über die Position als Relativlage von Skala zu Lesekopf. Durch Signalauswerten der zwischen den ersten und zweiten Koppelelektroden übertragenen Koppelsignale 7 ist eine Position inkrementell bestimmbar, wobei ein Inkrement Δi durch den Abstand zweier Maxima (oder Minima) bzw. Periodenlänge des Koppelsignals 7 festgelegt ist.

Die Amplituden der einzelnen Koppelsignale werden optional bei deren Auswertung berücksichtigt, wodurch vorteilhaft Abweichungen von einer idealen Elektrodengeometrie wie Abweichungen von Ideallagen der Receiverelektroden 6 und/oder Emitterelektroden 5 auf der Skala bzw. dem Lesekopf und/oder Abweichungen von idealen Elektrodenformen, z.B. Abweichungen von der idealen Rechteck- bzw. Sinusform, kompensierbar sind.

Fig. 2b zeigt als weiterer überdeckender Ausschnitt aus Skala bzw. Lesekopf eine theoretische (d.h. praktisch nicht ausführbare) relative Anordnung von Receiverelektroden 6p und 6n als zweite Koppelelektroden beider Sorten zu Emitterelektroden 5R-5U als erste Koppelelektroden. Die Emitterelektroden 5R-5U werden mit zeitlich sich ändernden Signalen, z.B. in Form von Wechselspannungssignalen gleicher Amplitude und Frequenz angesteuert und weisen vier verschiedener Koppelsignalphasen R, S, T, und U auf. Mittels kapazitiver Kopplung werden die Koppelsignale von den Receiverelektroden 6p und 6n empfangen und über die Kontakte 51 mit unterschiedlicher Polung mittelbar über die Signalüberführungsmittel einer Auswerteeinheit wie der Steuer- und Auswerteeinheit des Linearencoders zur differentiellen Auswertung zugeführt.

Die Breite B1 der Receiverelektroden 6p und 6n ist wie bereits erwähnt gleich der Breite B2 der Emitterelektroden 5R-5U an deren breitem Ende. Um Randeffekte zu berücksichtigen, kann es alternativ vorteilhaft sein, die Breite B2 der Emitterelektroden 5R-5U etwas kleiner zu halten als die Breite B1 der Receiverelektroden 6p, 6n. Zur Kompensation von seitlichem Versatz der Skala zum Lesekopf weisen die Receiverelektroden 6p und 6n vorteilhaft wie dargestellt eine radiale Erstreckung L2, also Länge entlang der Längsachse, auf, welche grösser ist als die radiale Erstreckung L1 der Emitterelektroden 5R-5U des gleichen Sensorrings. Durch die radiale Ausrichtung der Emitterelektroden 5R-5U und Receiverelektroden 6p und 6n und deren unterschiedliche Länge L1 bzw. L2 ist auch bei einer durch seitlichem Versatz bedingter Abweichung von einer Ideallage des Lesekopfs zur Skala quer zur Vorschubrichtung x in allen Relativstellungen von Skala zu Lesekopf eine von dieser Abweichung zumindest weitgehend unbeeinflusste kapazitive Kopplung sichergestellt.

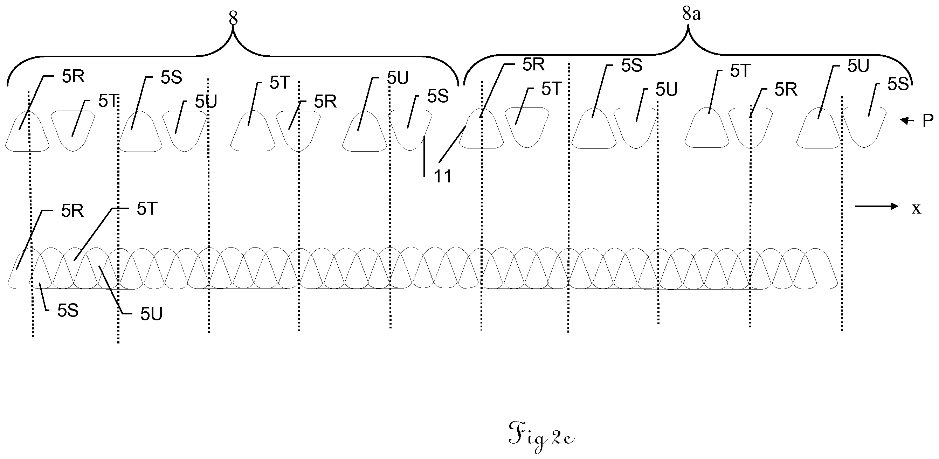

Die vier unterschiedlichen Phasen RSTU der zueinander geometrisch verschobenen ersten Koppelelektroden sind zueinander versetzt. Bei Verwendung von vier solcher um 90° versetzter Phasen RSTU müssten die entsprechenden Emitterelektroden 5R-5U wie dargestellt so angeordnet werden, dass sich jeweils Emitterelektroden mit der nächstfolgenden Phase überlagern, z.B. die Emitterelektroden 5S mit der Emitterelektroden 5R und die Emitterelektroden 5T mit der Emitterelektroden 5S. Da dies in der Praxis natürlich nicht möglich ist, werden wie in der folgenden Fig. 2c dargestellt, Emitterelektroden selektiv mittels einer Phasenpermutation ausgelassen.

Fig. 2c zeigt unten die in der Praxis unmögliche Anordnung von sich überlagernden ersten Koppelelektroden als Emitterelektroden 5R-5U aus Fig. 2b mit der einfachen Abfolge von Phasen RSTU in Vorschubrichtung x fortgesetzt, wobei sich die Anordnung aus Fig. 2b neunmal wiederholt. Die gestrichelten vertikalen Linien zeigen jeweils Emitterelektroden gleicher Phase 5R an. Mittels des im Folgenden beschriebenen Prinzips der Phasenpermutation werden von diesen sechsunddreissig Emitterelektroden nun gezielt Emitterelektroden weggelassen.

In Fig. 2c oben ist ein Beispiel für eine Phasenpermutation P dargestellt. Bei dieser Phasenpermutation P werden von jeweils 20 aufeinanderfolgenden Emitterelektroden jeweils 2 Emitterelektroden jeder Phase beibehalten, die 3 übrigen ausgelassen. Es ergibt sich ein Permutationsintervall 8, kurz P-Intervall genannt, mit der Phasenabfolge R-T-S-U-T-R-U-S. Über das gesamte P-Intervall 8 und damit über den gesamten Lesekopf ist eine Gleichverteilung der vier Phasen gegeben. Nach Ende eines P-Intervalls 8 wird diese Phasen- bzw. Emitterelektrodenabfolge über den gesamten Lesekopf jeweils wiederholt, wie in Fig. 2c oben mit dem nächstes P-Intervall 8a angedeutet.

Um einen elektrisch ausreichend isolierenden Abstand zwischen den übrig gebliebenen Emitterelektroden 5R-5U zu erhalten bei dennoch kompakter Anordnung der Emitterelektroden 5R-5U, weisen jeweils direkt benachbarte Emitterelektroden 5R-5U vorteilhaft eine gegensinnige radiale Ausrichtung auf, d.h. die jeweils übernächsten Emitterelektroden 5R-5U sind wie in Fig. 2c dargestellt um 180° im Vergleich zu den jeweils nächsten Emitterelektroden 5R-5U gedreht. Die gegenüberliegenden Ränder 11 benachbarter Emitterelektroden 5R-5U sind optional etwa gerade geformt, wodurch sich Emitterelektroden 5R-5U kompakt entlang der Vorschubrichtung x anordnen lassen. Dabei befinden sich optional zwischen den und/oder um die Emitterelektroden 5S-5U jeweils Schutzelektroden zur gegenseitigen Abschirmung. Alternativ oder zusätzlich wird der Abstand zwischen den Emitterelektroden 5R-5U ausreichend gross bemessen. Als weitere Alternative oder zusätzliche Massnahme erfolgt das Ansteuern von Emitterelektroden einer Koppelsignalphase, z.B. aller Emitterelektroden 5R, mittels eines Zeitmultiplexverfahren zeitlich versetzt zum Ansteuern der Emitterelektroden der anderen Phase, also z.B. der Emitterelektroden 5S-5U, wodurch gegenseitige Störungen der Koppelsignale vermieden werden.

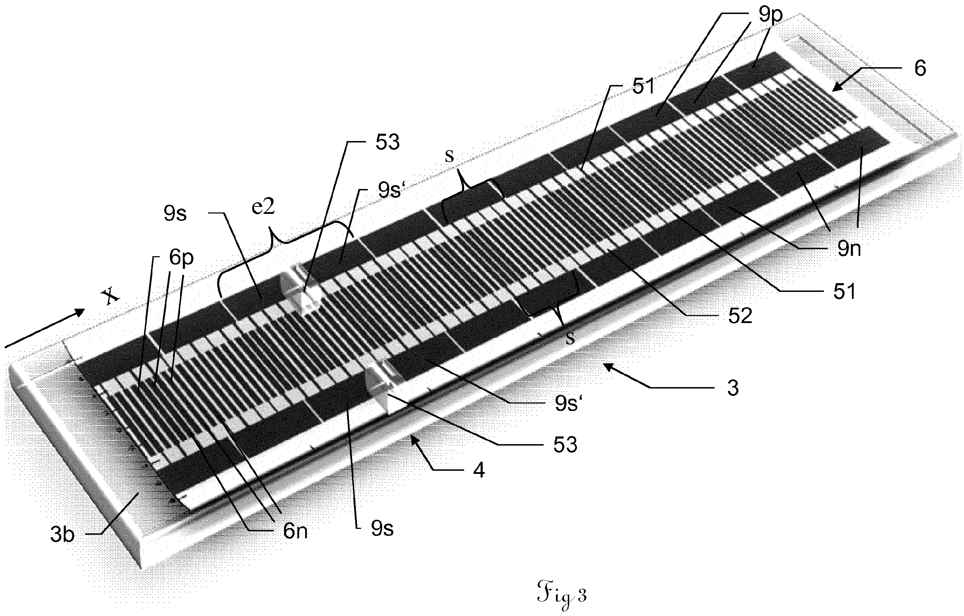

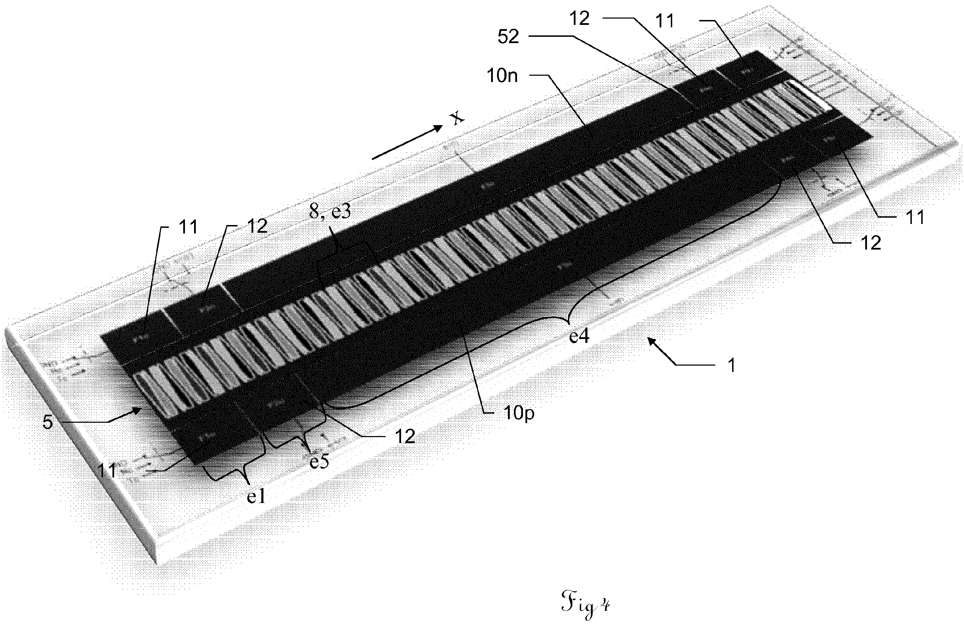

Fig. 3 zeigt einen Ausschnitt aus einer erfindungsgemässen Skala 3 auf einem Skalenträger 3b in Schrägansicht. Die rechteckförmigen Emitterelektroden 6 bilden in Vorschubrichtung x eine Spur und sind in Emitterelektroden der einen Sorte 6p und Emitterelektroden der anderen Sorte 6n unterteilt, wobei jede zweite Emitterelektrode 6 gleicher Sorte ist. Die einzelnen Emitterelektroden 6 sind durch Isolierungen 52 elektrisch voneinander getrennt. Die Skala 3 ist passiv. Um die von den Emitterelektroden 6 empfangenen Koppelsignale der Steuer- und Auswerteeinheit zuzuführen, weisen die Skala 3 und der Lesekopf Signalüberführungsmittel auf. Die skalenseitigen Signalüberführungsmittel sind in der dargestellten Ausführungsform ausgebildet als eine Vielzahl von gleichen zweiten Überführungselektroden 9p und 9n, welche mit ersten Überführungselektroden des Lesekopfs (siehe Fig. 4) kapazitiv koppeln, um Koppelsignale zwischen der Skala 3 und dem Lesekopf zu überführen. Im Gegensatz zum positionsabhängigen Austausch der Koppelsignale zwischen den Emitterelektroden und den Receiverelektroden 6p, 6n (siehe Fig. 2a) ist die Übertragung von Koppelsignalen zwischen den Überführungselektroden zumindest im Wesentlichen unabhängig von der Relativlage Skala - Lesekopf, da ja die Koppelsignalübertragung nicht den Zweck verfolgt, eine Information zu erhalten, anhand derer die Relativlage von Skala zu Lesekopf bestimmbar ist.

Die zweiten Überführungselektroden 9p, 9n sind entsprechend der unterschiedlichen Sorten der Receiverelektroden 6p, 6n in zwei Sorten 9p und 9n unterteilt, wobei die zweiten Überführungselektroden 9p auf der einen Seite der Receiverelektroden 6p, 6n angeordnet sind und die zweiten Überführungselektroden der anderen Sorte auf der anderen Seite und über Kontakte 51 jeweils mit wenigstens einer Receiverelektrode 6p, 6n gleicher Sorte elektrisch leitend verbunden sind. Im Übrigen sind die Receiverelektroden 6 unabhängig von ihrer Sorte kongruent zueinander, also gleich gestaltet. Im Beispiel sind alle Receiverelektroden 6 gleich rechteckförmig. Die zweiten Überführungselektroden 9p und 9n sind in der Ausführungsform nach Fig. 3 jeweils mit einer Sequenz s benachbarter Receiverelektroden gleicher Sorte 6p bzw. 6n verbunden. Die Länge in Vorschubrichtung x einer solchen Sequenz s entspricht vorzugsweise der Länge in Vorschubrichtung x eines P-Intervalls auf dem Lesekopf. Durch eine derartige Abstimmung der Sequenzen s auf die P-Intervalle wird erreicht, dass die Sinusform der Koppelsignale auch bei der Zusammenführung von Koppelsignalen der Receiverelektroden 6 einer Sequenz s ohne zusätzliche Massnahmen erhalten bleibt.

Die Skala nach Fig. 3 zeigt je Sorte eine zweite Überführungselektrode 9s und eine zweite Überführungselektrode 9s', welche benachbart zueinander sind und nicht wie die restlichen abgebildeten zweiten Überführungselektroden elektrisch isoliert voneinander, sondern mittels einer elektrischen Verbindung 53 kurzgeschlossen sind. Diese kurzgeschlossenen zweiten Überführungselektroden 9s und 9s' bzw. die darüber verbundenen Receiverelektroden 6p bzw. 6n, bilden einen Positionsreferenzmarker 4. Da der kapazitive Positionsreferenzmarker 4 mittels modifizierter zweiter Überführungselektroden 9s bzw. 9s' gebildet ist, wird durch einen erfindungsgemässen Positionsreferenzmarker 4 die Spur der Receiverelektroden 6 nicht unterbrochen, so dass auch die inkrementelle Bestimmung von relativen Positionen entlang der ganzen Skala 3 kontinuierlich bzw. stetig, d.h. unterbrechungsfrei, ermöglicht ist. Derartige aus kurzgeschlossenen zweiten Überführungselektroden 9s und 9s' gebildete Positionsreferenzmarker 4 finden sich vorzugsweise auch im weiteren, nicht dargestellten Bereich der Skala 3, wobei vorzugsweise der Abstand der Positionsreferenzmarker 4 zueinander gleich bleibend ist, d.h. im Beispiel liegt jeweils eine gleiche Anzahl voneinander isolierter zweiter Überführungselektrode 9p bzw. 9n zwischen den kurzgeschlossenen zweiten Überführungselektroden 9s bzw. 9s'. Der Abstand der Positionsreferenzmarker 4 zueinander ist in der Steuer- und Auswerteeinheit hinterlegt.

Die anhand von kurzgeschlossenen zweiten Überführungselektroden9s und 9s' gebildeten Positionsreferenzmarker 4 führen zu keiner Einschränkung hinsichtlich des Aufbaus der Skala 3. Die Skala 3 kann wie eine positionsreferenzmarkerlose Skala nach dem Stand der Technik konzipiert werden, so dass die Positionsreferenzmarker 4 zu keiner Schmälerung der Gestaltungsfreiheit der Skala 3 führen. Lediglich der Lesekopf ist zur Erfassung bzw. Identifizierung der so gebildeten Positionsreferenzmarker 4 zu modifizieren, wie nachfolgend anhand Figur 4 beschrieben.

Fig. 4 zeigt einen Lesekopf 1 in Schrägansicht. Der Lesekopf 1 weist Emitterelektroden 5 auf, welche in Vorschubrichtung x und in einer Anzahl von P-Intervallen 8 bei vier verschiedenen Koppelsignalphasen (siehe Fig. 2c) angeordnet sind. Als Signalüberführungsmittel zur Überführung der Koppelsignale zwischen Skala und Lesekopf 1 weist der Lesekopf 1 erste Überführungselektroden 10n und 10p auf, wobei die jeweilige Überführungselektroden 10p mit den zweiten Überführungselektroden der Skala (siehe Fig. 3) gleicher Sorte kapazitiv koppelt.

In Vorschubrichtung x den ersten Überführungselektroden 10p bzw. 10n vor- und nachgeordnet weist der Lesekopf 1 Abschirmelektroden 12 und dritte Koppelelektroden 11 auf, die elektrisch isoliert voneinander und den ersten Überführungselektroden 10p, 10n sind. Die Erstreckung e4 in Vorschubrichtung x der Überführungselektroden 10p bzw. 10n ist viel grösser als die Erstreckung e1 bzw. e5 der Abschirmelektroden 12 und dritten Koppelelektroden 11. Die Abschirmelektroden sind jedoch ausreichend gross, um zur Abschirmung der Überführungselektroden 10p bzw. 10n zu dienen, wodurch vor allem störende Randeffekte an den ersten Überführungselektroden 10p, 10n vermieden werden. Die dritten Koppelelektroden 11 dienen zur Übertragung von Identifikationssignalen zur Identifizierung der durch modifizierte zweiten Überführungselektroden gebildeten Positionsreferenzmarker der Skala (siehe Fig. 3). Alternativ oder zusätzlich dienen die dritten Koppelelektroden 11 ebenfalls als Abschirmelektroden bzw. sind weggelassen oder durch weitere Abschirmelektroden 12 ersetzt.

Wie dargestellt ist die Erstreckung in Vorschubrichtung x der ersten Koppelelektroden 5 etwa so gross wie diejenige der Überführungselektroden 10p bzw. 10n, der Abschirmelektroden 11 und der dritten Koppelelektroden 12 (e1+e4+e5) zusammen. Alternativ ist die Erstreckung in Vorschubrichtung x der ersten Koppelelektroden 5 zumindest länger als die Erstreckung e4 der Überführungselektroden 10p bzw. 10n, z.B. überragen sie die Überführungselektroden 10p bzw. 10n um ein Zehntel oder ein Fünftel von deren Erstreckung e4.

Zum inkrementellen Bestimmen einer Position als relative Verschiebung von Lesekopf 1 zur Skala wird der Linearencoder in einem Positionsbestimmungsmodus betrieben. Ein solcher Positionsbestimmungsmodus zeichnet sich dadurch aus, dass hierbei zwischen den ersten Koppelelektroden 5 und den zweiten Koppelelektroden 6 ausgetauschten und von den ersten Überführungselektroden 10p, 10n übertragenen (im Beispiel empfangenen) Koppelsignale zur Positionsbestimmung ausgewertet werden, während die Abschirmelektroden 12 und dritten Koppelelektroden 11 geerdet sind, um die ersten Überführungselektroden 10p, 10n abzuschirmen.

Zur Identifizierung der Positionsreferenzmarker, z.B. um Positionen absolut zu verorten bzw. deren absolute Verortung zu verifizieren wird der Linearencoder in einem Positionsreferenzmarkeridentifizierungsmodus betrieben, bei dem die dritten Koppelelektroden 11 nicht geerdet sind, sondern gesteuert durch die Steuer- und Auswerteeinheit Identifikationssignale übertragen, also emittieren bzw. empfangen. Die Positionsreferenzmarker werden mittels der Identifikationssignale identifiziert. Hierfür sind die dritten Koppelelektroden 11 und die kurzgeschlossenen zweiten Überführungselektroden der Skala aufeinander abgestimmt, indem die Erstreckung e1 in Vorschubrichtung x der dritten Koppelelektroden 11 und die Erstreckung der als Positionsreferenzmarker dienenden zweiten Überführungselektroden (Erstreckung e2 in Fig. 3) derart bemessen sind, dass die Identifikationssignale jeweils mittels kapazitiver Kopplung von kurzgeschlossenen zweiten Überführungselektroden sowohl mit einer dritten Koppelelektrode 11 als auch einer ersten Überführungselektrode 10p bzw. 10n abgreifbar sind. Die kurzgeschlossenen zweiten Überführungselektroden sind zusammen also so lang, dass sie - in entsprechender Relativlage bzw. Stellung von Lesekopf 1 zur Skala - mittels kapazitiver Kopplung eine Brücke zwischen der dritten Koppelelektrode 11 und der ersten Überführungselektrode 10p bzw. 10n einer Sorte auf einer Seite bilden zur Übertragung der Identifikationssignale.

Arbeitet der Linearencoder im Positionsreferenzmarkeridentifizierungsmodus, werden also beim Überfahren eines Positionsreferenzmarkers zusätzlich oder alternativ zu den Koppelsignalen die Identifikationssignale der dritten Koppelelektroden 11 wenigstens einer Seite des Lesekopfs 1 (der in Vorschubrichtung vorderen oder hinteren Seite) empfangen, so dass anhand der Auswertung der Identifikationssignale der Positionsreferenzmarker identifizierbar ist. Somit wird durch die vorliegende Erfindung ein Linearencoder bereitgestellt zur Bestimmung der relativen Position und zur Identifizierung von Positionsreferenzmarkern.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander als kapazitive Linearencoder einsetzbar, sowie auch mit entsprechenden Vorrichtungen und Verfahren des Stands der Technik kombinierbar sind, und die Erfindung lediglich gemäß dem Wortlaut der abgehängten Ansprüche definiert ist.

## Patentansprüche

1. Kapazitiver Linearencoder (100) zur Bestimmung von Positionen entlang einer Vorschubrichtung mit
• einem Lesekopf (1) mit einer Vielzahl von entlang der Vorschubrichtung (x) angeordneten ersten Koppelelektroden (5, 5R-5U),
• einer Skala (3) mit einer Vielzahl von entlang der Vorschubrichtung (x) angeordneten zweiten Koppelelektroden (6, 6p, 6n) und
• einer Steuer- und Auswerteeinheit (2),
wobei
• Lesekopf (1) und Skala (3) in Vorschubrichtung (x) relativ zueinander verschiebbar sind,
• die Breite B1 der ersten Koppelelektroden (5, 5R-5U) und die Breite B2 der zweiten Koppelelektroden (6, 6p, 6n) aufeinander abgestimmt sind,
• die ersten Koppelelektroden (5, 5R-5U) wenigstens drei zueinander versetzte Koppelsignalphasen (R, S, T, U) aufweisen, wobei die Abfolge der Koppelsignalphasen (R, S, T, U) durch eine Phasenpermutation (P) definiert ist, so dass jeweils eine Reihe benachbarter erster Koppelelektroden (5, 5R-5U) ein P-Intervall (8) bilden,
• bei Steuerung durch die Steuer- und Auswerteeinheit (2) zeitlich sich ändernde Koppelsignale (7) durch kapazitive Kopplung zwischen den ersten und zweiten Koppelelektroden (5, 5R-5U, 6, 6p, 6n) ausgetauscht werden,
• die Positionen von der Steuer- und Auswerteeinheit (2) durch Signalauswertung der zwischen den ersten und zweiten Koppelelektroden (5, 5R-5U, 6, 6p, 6n) ausgetauschten Koppelsignale (7) bestimmbar sind, wobei die zweiten Koppelelektroden (6p, 6n) für eine differentielle Auswertung der Koppelsignale (7) in wenigstens zwei zueinander wechselseitige Sorten (6n, 6 p) aufgeteilt sind, und
• die Skala (3) passiv ist, wozu der Linearencoder (100) Überführungselektroden (9p, 9n, 9s, 9s', 10p, 10n) als Signalüberführungsmittel aufweist zur Übertragung der Koppelsignale (7) von der Skala (3) auf den Lesekopf (1), wobei
∘ die Skala (3) pro Sorte der zweiten Koppelelektroden (6n, 6p) mehrere zweite Überführungselektroden (9p, 9n) und der Lesekopf (1) pro Sorte (6n, 6p) der zweiten Koppelelektroden wenigstens eine erste Überführungselektrode (10p, 10n) aufweisen,
∘ jede der zweiten Überführungselektroden (9p, 9n) mit einer oder mehreren zweiten Koppelelektroden gleicher Sorte (6n, 6p) elektrisch leitend verbunden ist,
∘ zweite Überführungselektroden (9p, 9n) mit der wenigstens einen ersten Überführungselektroden (10p, 10n) gleicher Sorte kapazitiv koppeln,
**dadurch gekennzeichnet, dass**
• der Lesekopf (1) Abschirmelektroden (12) zur elektrischen Abschirmung der ersten Überführungselektroden (10p, 10n) aufweist, wodurch durch externe oder interne Quellen bedingte Störungen der Koppelsignale (7) zumindest vermindert werden, wobei die Abschirmelektroden (12) den ersten Überführungselektroden (10p, 10n) in Vorschubrichtung (x) vor- und/oder nachgeordnet angebracht sind, und
• die Erstreckung in Vorschubrichtung (x) der Anordnung der ersten Koppelelektroden (5, 5R-5U) grösser ist als die Erstreckung (e4) der ersten Überführungselektroden (10p, 10n), so dass ein Teil der ersten Koppelelektroden (5, 5R-5U) sich über die ersten Überführungselektroden (10p, 10n) in Vorschubrichtung (x) hinaus erstreckt.

2. Linearencoder (100) nach Anspruch 1,
**dadurch gekennzeichnet, dass**
die ersten Koppelelektroden Emitterelektroden sind.

3. Linearencoder (100) nach Anspruch 1 oder 2,
**dadurch gekennzeichnet, dass**
die zweiten Koppelelektroden Receiverelektroden sind.

4. Linearencoder (100) nach einem der vorhergehenden Ansprüche,
**dadurch gekennzeichnet, dass**
die ersten Koppelelektroden (5, 5R-5U) vier um jeweils ein Viertel zueinander versetzte Koppelsignalphasen (R, S, T, U) aufweisen.

5. Linearencoder (100) nach einem der vorhergehenden Ansprüche,
**dadurch gekennzeichnet, dass**
je einer ersten Überführungselektroden (10p, 10n) mindestens je eine Abschirmelektrode (12) in Vorschubrichtung vorgeordnet und eine Abschirmelektrode (12) in Vorschubrichtung (x) nachgeordnet angebracht ist.

6. Linearencoder (100) nach einem der vorhergehenden Ansprüche,
**dadurch gekennzeichnet, dass**
die Erstreckung in Vorschubrichtung (x) der Anordnung der ersten Koppelelektroden (5, 5R-5U) mindestens etwa so gross ist wie die Erstreckung in Vorschubrichtung (x) der jeweiligen ersten Überführungselektroden (10p, 10n) und der jeweiligen Abschirmelektroden (11) zusammen.

7. Linearencoder (100) nach einem der vorhergehenden Ansprüche,
**dadurch gekennzeichnet, dass**
zur Robustheit gegenüber Abweichungen von einer idealen Ausrichtung von Lesekopf (1) zur Skala (3) quer zur Vorschubrichtung (x) sich die Ausdehnung quer zur Vorschubrichtung (x) miteinander koppelnder Überführungselektroden (9p, 9n, 9s, 9s', 10p, 10n) der Skala (3) und des Lesekopfs (1) voneinander unterscheiden.

8. Linearencoder (100) nach einem der vorhergehenden Ansprüche,
**dadurch gekennzeichnet, dass**
jede zweite Überführungselektroden (9p, 9n) mit einer Sequenz (s) in Vorschubrichtung (x) benachbarter zweiter Koppelelektroden (6, 6p, 6n) verbunden ist.

9. Linearencoder (100) nach Anspruch 8,
**dadurch gekennzeichnet, dass**
die Länge einer jeden solchen Sequenz (s) der Länge entspricht, über den sich genau eines der P-Intervalle (8) auf dem Lesekopf (1) erstreckt.

10. Linearencoder (100) nach einem der vorhergehenden Ansprüche,
**dadurch gekennzeichnet, dass**
die ersten und/oder zweiten Koppelelektroden (5, 5R-5U, 6, 6p, 6n) von einer elektrisch abschirmenden Schutzelektrode umgeben sind.

11. Linearencoder (100) nach einem der vorhergehenden Ansprüche,
**dadurch gekennzeichnet, dass**
die ersten und/oder zweiten Koppelelektroden (5, 5R-5U, 6, 6p, 6n) derart aufeinander abgestimmt, insbesondere geformt, sind, dass durch eine Verschiebung der Skala (3) gegenüber dem Lesekopf (1) ein sinusförmiger Verlauf der kapazitiven Kopplung generiert wird.

12. Linearencoder (100) nach Anspruch 11,
**dadurch gekennzeichnet, dass**
für eine möglichst dichte Anordnung einander zugewandte Ränder direkt benachbarter erster Koppelelektroden (5, 5R-5U) etwa gerade geformt sind und direkt benachbarte erste Koppelelektroden (5, 5R-5U) gegensinnig ausgerichtet sind.

13. Verfahren zum Bestimmen von Positionen mit einem Linearencoder (100) nach Anspruch 1
mit
• Verschieben des Lesekopfs (1) relativ zur Skala (3) entlang der Vorschubrichtung (x) ausgehend von einer ersten Relativlage von Lesekopf (1) zu Skala (3),
• Kapazitives Abtasten der Skala (3) durch den Lesekopf (1) mittels Austauschen von Koppelsignalen (7) zwischen den ersten und zweiten Koppelelektroden (5, 5R-5U, 6, 6p, 6n), wobei das Austauschen abhängig von der jeweiligen Relativlage ist,
• Übertragen der Koppelsignale (7) mittels der Signalüberführungsmittel zwischen Skala (3) und Lesekopf (1),
Bestimmen einer relativen Position als Distanz zwischen der ersten Relativlage und einer zweiten Relativlage von Lesekopf (1) zu Skala (3) mittels differentiellem Signalauswerten der ausgetauschten Koppelsignale (7).

14. Computerprogrammprodukt, mit Programmcode, der geeignet ist, dass ein Linearencoder nach Anspruch 1 die Verfahrensschritte nach Anspruch 13 ausführt.

15. Computerlesbares Medium, auf dem das Computerprogrammprodukt nach Anspruch 14 gespeichert ist.

## Claims

1. Capacitive linear encoder (100) for determining positions along a feed direction, comprising
• a read head (1) having a plurality of first coupling electrodes (5, 5R-5U) arranged along the feed direction (x),
• a scale (3) having a plurality of second coupling electrodes (6, 6p, 6n) arranged along the feed direction (x), and
• a control and evaluation unit (2),
wherein
• read head (1) and scale (3) are displaceable relative to each other in the feed direction (x),
• the width B1 of the first coupling electrodes (5, 5R-5U) and the width B2 of the second coupling electrodes (6, 6p, 6n) are matched to one another,
• the first coupling electrodes (5, 5R-5U) have at least three mutually offset coupling signal phases (R, S, T, U), wherein the sequence of the coupling signal phases (R, S, T, U) is defined by a phase permutation (P), so that in each case a series of adjacent first coupling electrodes (5, 5R-5U) form a P interval (8),
• when controlled by the control and evaluation unit (2), temporally changing coupling signals (7) are exchanged by capacitive coupling between the first and second coupling electrodes (5, 5R-5U, 6, 6p, 6n),
• the positions can be determined by the control and evaluation unit (2) by signal evaluation of the coupling signals (7) exchanged between the first and second coupling electrodes (5, 5R-5U, 6, 6p, 6n), wherein the second coupling electrodes (6p, 6n) can be divided into at least two mutually reciprocal types (6n, 6p) for a differential evaluation of the coupling signals (7), and
• the scale (3) is passive, for which purpose the linear encoder (100) comprises transfer electrodes (9p, 9n, 9s, 9s', 10p, 10n) as signal transfer means for transferring the coupling signals (7) from the scale (3) to the read head (1),
wherein
∘ the scale (3) comprises per type of the second coupling electrodes. (6n, 6p) a plurality of second transfer electrodes (9p, 9n) and the read head (1) has per type (6n, 6p) of the second coupling electrodes at least one first transfer electrode (10p, 10n),
∘ each of the second transfer electrodes (9p, 9n) is electrically conductively connected to one or more second coupling electrodes of the same type (6n, 6p),
∘ second transfer electrodes (9p, 9n) capacitively couple to the at least one first transfer electrode (10p, 10n) of the same type,
**characterized in that**
• the read head (1) has shielding electrodes (12) for electrical shielding of the first transfer electrodes (10p, 10n), whereby disturbances of the coupling signals (7) caused by external or internal sources are at least reduced, wherein the shielding electrodes (12) are arranged upstream and/or downstream of the first transfer electrodes (10p, 10n) in the feed direction (x), and
• the extension in the feed direction (x) of the arrangement of the first coupling electrodes (5, 5R-5U) is greater than the extension (e4) of the first transfer electrodes (10p, 10n), so that a portion of the first coupling electrodes (5, 5R-5U) extends in the feed direction (x) beyond the first transfer electrodes (10p, 10n).

2. Linear encoder (100) according to claim 1,
**characterized in that**
the first coupling electrodes are emitter electrodes.

3. Linear encoder (100) according to claim 1 or 2,
**characterized in that**
the second coupling electrodes are receiver electrodes.

4. Linear encoder (100) according to one of the preceding claims,
**characterized in that**
the first coupling electrodes (5, 5R-5U) have four coupling signal phases (R, S, T, U) which in each case are offset from one another by one quarter.

5. Linear encoder (100) according to one of the preceding claims,
**characterized in that**
at least one shielding electrode (12) each is arranged upstream in the feed direction of one first transfer electrode (10p, 10n) each and one shielding electrode (12) is arranged downstream in the feed direction (x).

6. Linear encoder (100) according to one of the preceding claims,
**characterized in that**
the extension in the feed direction (x) of the arrangement of the first coupling electrodes (5, 5R-5U) is at least approximately as large as the extension in the feed direction (x) of the respective first transfer electrodes (10p, 10n) and the respective shielding electrodes (12) together.

7. Linear encoder (100) according to one of the preceding claims,
**characterized in that**
for robustness with respect to deviations from an ideal alignment of the read head (1) to the scale (3) transversely to the feed direction (x), the extension of transfer electrodes (9p, 9n, 9s, 9s', 10p, 10n) of the scale (3) and of the read head (1), which couple with one another transversely to the feed direction (x), differs from one another.

8. Linear encoder (100) according to one of the preceding claims,
**characterized in that**
every second transfer electrode (9p, 9n) is connected to a sequence (s) in the feed direction (x) of adjacent second coupling electrodes (6, 6p, 6n).

9. Linear encoder (100) according to claim 8,
**characterized in that**
the length of each such sequence (s) corresponds to the length over which exactly one of the P intervals (8) on the read head (1) extends.

10. Linear encoder (100) according to one of the preceding claims,
**characterized in that**
the first and/or second coupling electrodes (5, 5R-5U, 6, 6p, 6n) are surrounded by an electrically shielding protective electrode.

11. Linear encoder (100) according to one of the preceding claims,
**characterized in that**
the first and/or second coupling electrodes (5, 5R-5U, 6, 6p, 6n) are matched to one another, in particular shaped, in such a way that a sinusoidal course of the capacitive coupling is generated by a displacement of the scale (3) relative to the read head (1).

12. Linear encoder (100) according to claim 11,
**characterized in that**
for as dense an arrangement as possible, mutually facing edges of directly adjacent first coupling electrodes (5, 5R-5U) are shaped such that they are approximately straight, and directly adjacent first coupling electrodes (5, 5R-5U) are aligned in opposite directions.

13. Method for determining positions with a linear encoder (100) according to claim 1, comprising
• displacing the read head (1) relative to the scale (3) along the feed direction (x) proceeding from a first relative position of read head (1) to scale (3),
• capacitive scanning of the scale (3) by the read head (1) by means of exchanging coupling signals (7) between the first and second coupling electrodes (5, 5R-5U, 6, 6p, 6n), wherein the exchanging is dependent on the respective relative position,
• transmitting the coupling signals (7) between the scale (3) and the read head (1) by means of the signal transfer means,
• determining a relative position as distance between the first relative position and a second relative position of read head (1) to scale (3) by means of differential signal evaluation of the exchanged coupling signals (7).

14. Computer program product, having program code which is suitable for a linear encoder according to claim 1 to carry out the method steps according to claim 13.

15. Computer-readable medium on which the computer program product according to claim 14 is stored.

## Revendications

1. Encodeur linéaire (100) capacitif destiné à déterminer des positions le long d'une direction d'avance, doté
• d'une tête de lecture (1) comportant une pluralité de premières électrodes de couplage (5, 5R-5U) disposées le long de la direction d'avance (x),
• d'une graduation (3) comportant une pluralité de deuxièmes électrodes de couplage (6, 6p, 6n) disposées le long de la direction d'avance (x), et
• d'une unité de commande et d'évaluation (2),
et dans lequel
• la tête de lecture (1) et la graduation (3) peuvent être déplacées l'une par rapport à l'autre dans la direction d'avance (x),
• la largeur B1 des premières électrodes de couplage (5, 5R-5U) et la largeur B2 des deuxièmes électrodes de couplage (6, 6p, 6n) sont mutuellement accordées,
• les premières électrodes de couplage (5, 5R-5U) présentent au moins trois phases de signal de couplage (R, S, T, U) décalées les unes par rapport aux autres, la succession des phases de signal de couplage (R, S, T, U) étant définie par une permutation de phase (P) telle que chaque rangée de premières électrodes de couplage (5, 5R-5U) voisines forme un intervalle P (8),
• l'unité de commande et d'évaluation (2) permet de commander un échange de signaux de couplage (7) variables dans le temps entre les premières et les deuxièmes électrodes de couplage (5, 5R-5U, 6, 6p, 6n), par couplage capacitif,
• l'unité de commande et d'évaluation (2) peut déterminer les positions par évaluation des signaux de couplage (7) échangés entre les premières et les deuxièmes électrodes de couplage (5, 5R-5U, 6, 6p, 6n), les deuxièmes électrodes de couplage (6p, 6n) étant divisées en au moins deux sortes (6n, 6p) alternées pour une évaluation différentielle des signaux de couplage (7), et
• la graduation (3) est passive, l'encodeur linéaire (100) présentant pour cela des électrodes de transfert (9p, 9n, 9s, 9s', 10p, 10n) servant de moyens de transfert des signaux permettant de transmettre les signaux de couplage (7) de la graduation (3) à la tête de lecture (1), en sachant que
∘ la graduation (3) présente plusieurs deuxièmes électrodes de transfert (9p, 9n) pour chaque sorte (6n, 6p) de deuxième électrode de couplage, et la tête de lecture (1) présente au moins une première électrode de transfert (10p, 10n) pour chaque sorte (6n, 6p) de deuxième électrode de couplage,
∘ chacune des deuxièmes électrodes de transfert (9p, 9n) est reliée électriquement à une ou plusieurs deuxièmes électrodes de couplage de la même sorte (6n, 6p),
∘ des deuxièmes électrodes de transfert (9p, 9n) effectuent un couplage capacitif avec l'au moins une première électrode de transfert (10p, 10n) de la même sorte,
**caractérisé en ce que**
• la tête de lecture (1) présente des électrodes de blindage (12) pour la protection électrique des premières électrodes de transfert (10p, 10n), permettant au moins de réduire des perturbations des signaux de couplage (7) créées par des sources externes ou internes, les électrodes de blindage (12) étant disposées en amont et/ou en aval des premières électrode de transfert (10p, 10n) dans la direction d'avance (x), et
• l'étendue dans la direction d'avance (x) de la disposition des premières électrodes de couplage (5, 5R-5U) est supérieure à l'étendue (e4) des premières électrodes de transfert (10p, 10n), de manière qu'une partie des premières électrodes de couplage (5, 5R-5U) s'étend au-delà des premières électrodes de transfert (10p, 10n) dans la direction d'avance (x).

2. Encodeur linéaire (100) selon la revendication 1,
**caractérisé en ce que**
les premières électrodes de couplage sont des électrodes émettrices.

3. Encodeur linéaire (100) selon la revendication 1 ou 2,
**caractérisé en ce que**
les deuxièmes électrodes de couplage sont des électrodes réceptrices.

4. Encodeur linéaire (100) selon l'une des revendications précédentes,
**caractérisé en ce que**
les premières électrodes de couplage (5, 5R-5U) présentent quatre phases de signal de couplage (R, S, T, U) décalées chacune d'un quart.

5. Encodeur linéaire (100) selon l'une des revendications précédentes,
**caractérisé en ce que**
pour chaque première électrode de transfert (10p, 10n), il est disposé au moins une électrode de blindage (12) en amont dans la direction d'avance et une électrode de blindage (12) en aval dans la direction d'avance (x).

6. Encodeur linéaire (100) selon l'une des revendications précédentes,
**caractérisé en ce que**
l'étendue dans la direction d'avance (x) de la disposition des premières électrodes de couplage (5, 5R-5U) est au moins environ égale à l'étendue cumulée dans la direction d'avance (x) des premières électrodes de transfert (10p, 10n) correspondantes et des électrodes de blindage (12) correspondantes.

7. Encodeur linéaire (100) selon l'une des revendications précédentes,
**caractérisé en ce que**
pour assurer une robustesse vis-à-vis des écarts par rapport à l'orientation idéale de la tête de lecture (1) par rapport à la graduation (3), perpendiculairement à la direction d'avance (x), les électrodes de transfert (9p, 9n, 9s, 9s', 10p, 10n) de la graduation (3) et de la tête de lecture (1), effectuant un couplage mutuel, présentent des étendues perpendiculaires à la direction d'avance (x) différentes.

8. Encodeur linéaire (100) selon l'une des revendications précédentes,
**caractérisé en ce que**
chacune des deuxièmes électrodes de transfert (9p, 9n) est liée à une séquence (s) de deuxièmes électrodes de couplage (6, 6p, 6n) voisines dans la direction d'avance (x).

9. Encodeur linéaire (100) selon la revendication 8,
**caractérisé en ce que**
la longueur d'une telle séquence (s) correspond à la longueur exacte sur laquelle s'étend un des intervalles P (8) sur la tête de lecture (1).

10. Encodeur linéaire (100) selon l'une des revendications précédentes,
**caractérisé en ce que**
les premières et/ou deuxièmes électrodes de couplage (5, 5R-5U, 6, 6p, 6n) sont environnées d'électrodes de blindage assurant une protection électrique.

11. Encodeur linéaire (100) selon l'une des revendications précédentes,
**caractérisé en ce que**
les premières et/ou deuxièmes électrodes de couplage (5, 5R-5U, 6, 6p, 6n) sont mutuellement accordées, notamment formées, de manière qu'un déplacement de la graduation (3) par rapport à la tête de lecture (1) confère au cou-plage capacitif une forme sinusoïdale.

12. Encodeur linéaire (100) selon la revendication 11,
**caractérisé en ce que**
pour une disposition aussi dense que possible, les bords en vis-à-vis dans les premières électrodes de couplage (5, 5R-5U) directement voisines sont de forme approximativement droite, et les premières électrodes de couplage (5, 5R-5U) directement voisines sont orientées de manière opposée.

13. Procédé visant à déterminer des positions au moyen d'un encodeur linéaire (100) selon la revendication 1, consistant à
• déplacer la tête de lecture (1) par rapport à la graduation (3) dans la direction d'avance (x) à partir d'une première position relative de la tête de lecture (1) par rapport à la graduation (3),
• effectuer un balayage capacitif de la graduation (3) par la tête de lecture (1) au moyen d'un échange de signaux de couplage (7) entre les premières et les deuxièmes électrodes de couplage (5, 5R-5U, 6, 6p, 6n), l'échange dépendant de la position relative courante,
• transmettre les signaux de couplage (7) par l'intermédiaire des moyens de transfert des signaux entre la graduation (3) et la tête de lecture (1),
• déterminer une position relative via la distance entre la première position relative et une deuxième position relative de la tête de lecture (1) par rapport à la graduation (3), au moyen d'une évaluation différentielle des signaux de couplage (7) échangés.

14. Programme-produit d'ordinateur comportant un code de programme, lequel est apte à l'exécution des étapes du procédé selon la revendication 13 par un encodeur linéaire selon la revendication 1.

15. Support lisible par ordinateur, sur lequel est enregistré le produit-programme d'ordinateur selon la revendication 14.
